# EUROPÄISCHE PATENTSCHRIFT

(11) **EP 0 836 974 B1**
(45) Veröffentlichungstag und Bekanntmachung des Hinweises auf die Patenterteilung: **06.03.2002**
(21) Anmeldenummer: 97117657.3
(22) Anmeldetag: 11.10.1997
(51) Int. Cl.: B60T 11/224, B60T 13/16

(54) **Zweistufiges Bremsventil**
Two stage brake valve
Valve de freinage à deux étages

(30) Priorität: 17.10.1996 US 733229
(43) Veröffentlichungstag der Anmeldung: 22.04.1998
(73) Patentinhaber: DEERE & COMPANY, Moline, Illinois 61265-8098 (US); Vickers Incorporated, Searcy, Arkansas 72143 (US)
(72) Erfinder: Durant, Douglas Michael, Waterloo, Iowa 50701 (US); Backes, Peter William, Searcy, Arkansas 72143 (US)
(74) Vertreter: Magin, Ludwig Bernhard

(56) Entgegenhaltungen:
- EP-A- 0 669 241
- US-A- 3 972 191

## Beschreibung

Die Erfindung betrifft ein zweistufiges Bremsventil zur Versorgung wenigstens eines Bremsmechanismus mit Flüssigkeitsdruck. Das Bremsventil enthält einen Einlaß, der unter Druck stehende Bremsflüssigkeit von einer Pumpe erhält, eine Stufenbohrung und einen darin verschiebbaren Stufenkolben, der einen Vorfüllkolben mit größerem Durchmesser und einen hohlen Hochdruckkolben mit kleinerem Durchmesser aufweist. Der Stufenkolben ist aus einer Ruhestellung wegbewegbar, um Bremsflüssigkeit zu dem Bremsmechanismus zu fördern. Die Stufenbohrung und der Stufenkolben schließen eine Vorfüllkammer mit großem Querschnitt und eine Hochdruckkammer ein. Der Hochdruckkolben weist eine mit dem Bremsmechanismus in Verbindung stehende Steuernut auf, die dann mit dem Einlaß in Verbindung steht, wenn der Hochdruckkolben um eine bestimmte Wegstrecke aus seiner Ruhelage bewegt wurde, um Bremsflüssigkeit aus der Hochdruckkammer zu dem Bremsmechanismus zu fördern. Eine derartiges Bremsventil ist durch die EP-A-0 669 241 bekannt geworden.

zweistufige Bremsventile werden bei den John Deere Schleppern der Serien 6000, 7000, 8000 und 9000 benutzt. Ähnliche Bremsausführungen sind durch die EP-A-0 270 242 und die EP-A-0 669 241 bekannt geworden. Ein Bremsventil mit einem Vorfüllablaßventil geht aus der EP-A-0 669 241 hervor. Alle diese Ausführungen betreffen zweistufige Hydraulikbremsventile mit der Fähigkeit zur Servobremsung unter normalen Bedingungen. Es kann auch manuell gebremst werden, wenn die hydraulische Druckversorgung am Bremsventileinlaß nicht zur Verfügung steht.

Im Servomodus funktionieren diese Bremsventile ähnlich wie ein Druckminderungsventil mit Lastfühlfähigkeit. Solche Bremsventile enthalten eine Lastfühlablaßblende, die die Ventilhysteresis vermindert und die Stabilität verbessert. Diese Bremsventile liefern auch ein Lastfühlsignal, welches es der Pumpe ermöglicht, nur den Druck zur Verfügung zu stellen, der gefordert wird. Die Pumpe liefert das ganze zum Bremsen erforderliche Ölvolumen.

Im manuellen Modus müssen diese Bremsventile das ganze Öl, das zum Aufbau des erforderlichen Bremsdrucks benötigt wird, zur Verfügung stellen. Dies erfolgt in zwei Stufen. In der ersten Stufe liefert der Vorfüllkolben ein großes ölvolumen bei niedrigem Druck, um die Bremskomponenten zur Anlage zu bringen. Wenn dieser Volumenbedarf gedeckt ist, geht das Bremsventil in seine zweite Stufe über, in der ein kleinerer Kolben einen höheren Druck erzeugt, der zum Bremsen erforderlich ist. Sowohl die Drucksteuerung als auch die Rückflußsteuerung werden durch eine einzige ringförmige Nut im Hochdruckkolben vorgenommen.

Die Lastfühlablaßöffnung hat einen Leckagedurchgang zur Folge, der während der manuellen Bremsfunktion verschlossen werden muß. Daher enthalten diese Ventile ein Lastfühlabsperrventil, welches das Lastfühlsignal von der Öffnung trennt, wenn das Ventil in den manuellen Modus übergeht. Das Lastfühlabsperrventil erhöht die Komplexität des Bremsventils. Es ist wünschenswert, ein Ventil zur Verfügung zu haben, das einen einfachen Aufbau mit wenigen Teilen hat und daß bei seiner Herstellung wenige maschinelle Bearbeitungsgänge erfordert.

Die der Erfindung zugrunde liegende Aufgabe wird darin gesehen, ein gattungsgemäßes Bremsventil anzugeben, das einfach aufgebaut ist und sich einfach und kostengünstig herstellen läßt.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Das erfindungsgemäße zweistufige Bremsventil enthält eine Stufenbohrung und einen darin verschiebbaren Stufenkolben, der einen Vorfüllkolben mit größerem Durchmesser und einen hohlen Hochdruckkolben mit kleinerem Durchmesser aufweist. Der Stufenkolben läßt sich aus einer Ruhestellung wegbewegen, um Bremsflüssigkeit zu dem Bremsmechanismus zu fördern. Die Stufenbohrung und der Stufenkolben schließen eine Vorfüllkammer mit großem Querschnitt und eine Hochdruckkammer ein. Der Hochdruckkolben weist eine Steuernut auf, die mit dem Bremsmechanismus in Verbindung steht und die dann mit dem Einlaß verbunden ist, wenn der Hochdruckkolben um eine bestimmte Wegstrecke aus seiner Ruhelage bewegt wurde, um Bremsflüssigkeit aus der Hochdruckkammer zu dem Bremsmechanismus zu fördern. In dem Hochdruckkolben ist eine Ablaßöffnung ausgebildet und verbindet die Hochdruckkammer mit einer äußeren Oberfläche des Hochdruckkolbens. Die Lage der Ablaßöffnung ist derart gewählt, daß sie anfänglich offen ist und offen bleibt bis die Steuernut etwas mit dem Einlaß überlappt. Bei weiterer Bewegung des Stufenkolbens schließt die Ablaßöffnung, so daß während einer manuellen Betätigung des Bremsventils der Bremsdruck nicht über die Ablaßöffnung verloren geht.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: eine Endansicht eines erfindungsgemäßen zweistufigen Bremsventils,
- Fig. 2: einen Querschnitt entlang der Linie 2 - 2 der Fig. 1 und

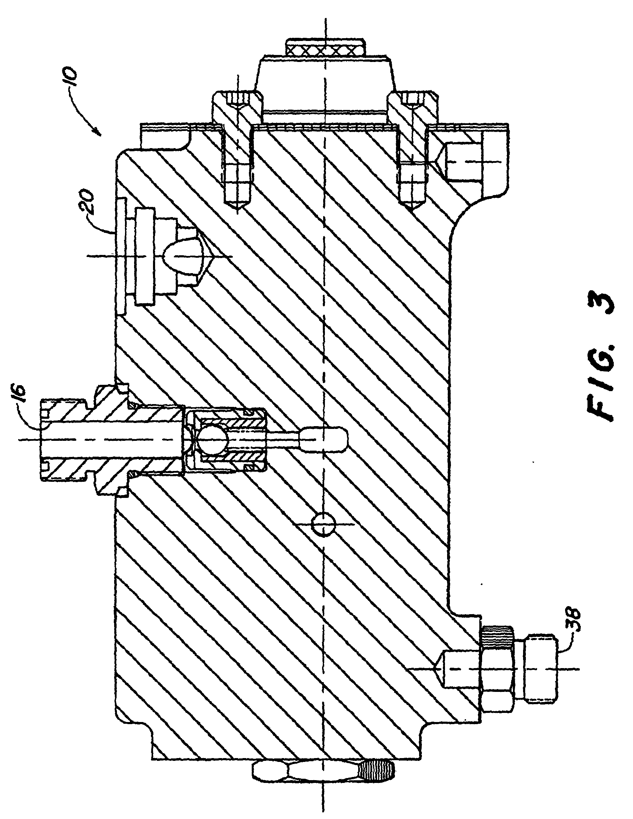

- Fig. 3: einen Querschnitt entlang der Linie 3 - 3 der Fig. 1.

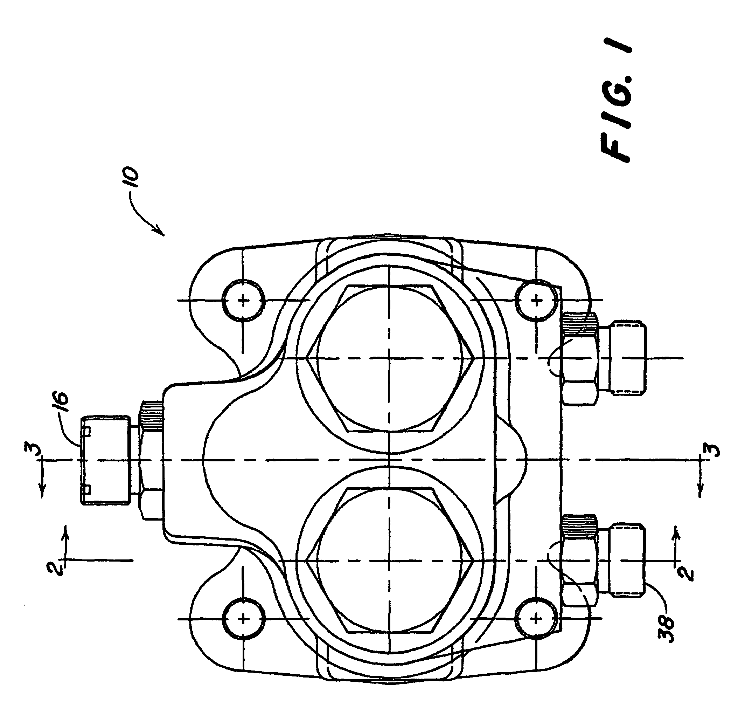

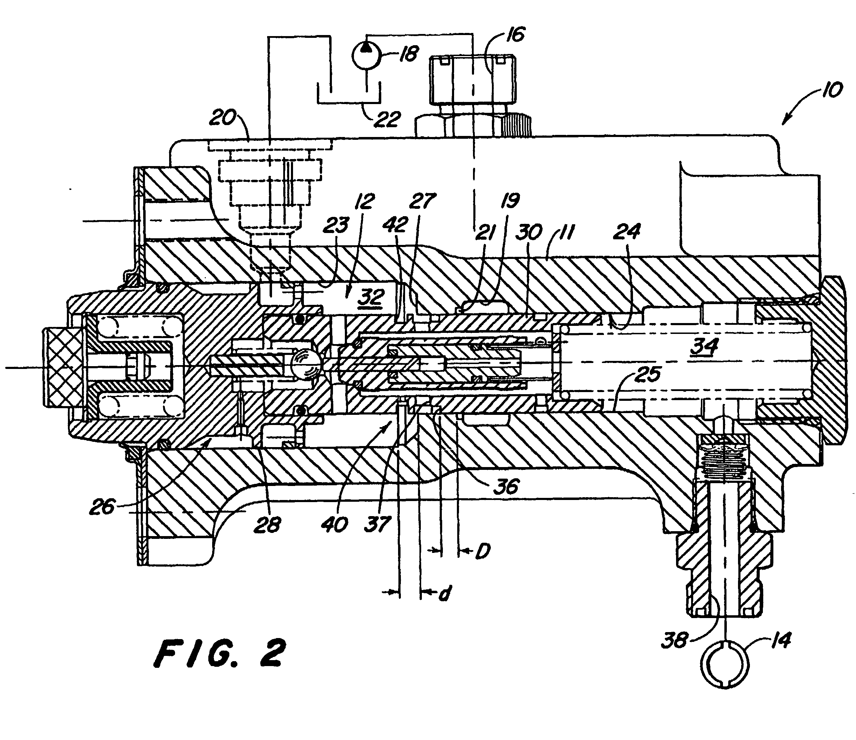

In den Fig. 1 und 2 ist eine Seite eines doppelseitigen zweistufigen Bremsventils 10 dargestellt, dessen Gehäuse 11 ein nicht näher dargestelltes linkes zweistufiges Bremsventil und ein rechtes zweistufiges Bremsventil 12 einschließt, welche Flüssigkeitsdruck an einen nicht dargestellten linken Bremsmechanismus bzw. einen rechten Bremsmechanismus 14 abgeben. Jedes Bremsventil hat einen Einlaß 16, der unter Druck stehende Bremsflüssigkeit von einer Pumpe 18 erhält, eine Einlaßnut 19, die mit dem Einlaß 16 in Verbindung steht, einen Vorratsbehälteranschluß 20, der mit einem Vorratsbehälter 22 in Verbindung steht, und eine Stufenbohrung 24 mit einem Abschnitt 23 großen Durchmessers und einem Abschnitt 25 kleinen Durchmessers, zwischen denen eine Schulter 27 ausgebildet ist. Eine kleinere Ringnut 21 ist auf der einer Vorfüllkammer 32 zugewandten Seite der Einlaßnut 19 ausgebildet.

Ein Stufenkolbenbauteil 26 enthält einen Vorfüllkolben 28 großen Durchmessers und einen hohlen Hochdruckkolben 30 (der hülsenförmig ausgebildet ist) kleinen Durchmessers. Die Stufenbohrung 24 und das Stufenkolbenbauteil 26 bilden eine Vorfüllkammer 32 mit großem Volumen sowie eine Hochdruckkammer 34 aus. Der Hochdruckkolben 30 hat eine Steuernut 36 und radiale Bohrungen 37, die über die Hochdruckkammer 34 und einen Auslaß 38 mit dem Bremsmechanismus 14 in Verbindung stehen. Die bisher beschriebene Ausbildung entspricht dem in der EP-A-0 669 241 beschriebenen Bremsventil.

Entsprechend der vorliegenden Erfindung ist in dem Hochdruckkolben 30 in der Nähe seiner Steuernut 36 eine Ablaßöffnung 40 ausgebildet, die axial zwischen der Steuernut 36 und dem Vorfüllkolben 28 liegt. Die Ablaßöffnung 40 besteht aus einer Ablaßnut 42, die in einer äußeren Oberfläche des Hochdruckkolbens 30 ausgebildet ist, und einem engen radialen Durchgang, der sich von der Ablaßnut 42 zu dem Inneren des Hochdruckkolbens 30 erstreckt.

Wenn der Stufenkolben 26 sich in seiner in Fig. 1 dargestellten Ruhelage befindet, verbindet die Ablaßöffnung 40 die Hochdruckkammer 34 über die Vorfüllkammer 32 und den Anschluß 20 mit dem Vorratsbehälter 22. Während einer anfänglichen Bewegung des Hochdruckkolbens 30 aus seiner Ruhelage (gemäß Fig. 2 nach rechts) bleibt die Ablaßöffnung 40 gegenüber dem Vorratsbehälteranschluß 20 geöffnet. Die Kanten der Ringnut 21 und der Steuernut 36 sind durch einen Abstand D zueinander beabstandet. Die Schulter 27 und die zu dieser entferntest liegende Kante der Ablaßnut 42 sind durch einen Abstand d zueinander beabstandet. Der Abstand D ist etwas kleiner als der Abstand d. Infolgedessen bleibt die Ablaßöffnung 40 während des ersten Millimeters Überlappung der Steuernut 36 zu den Einlaßnuten 19 und 21 geöffnet. Aufgrund weiterer Bewegung des Kolbens 30 nach rechts, wird die Ablaßnut 42 durch die Wandung der Bohrung 25 verschlossen, während sich die Steuernut 36 weiter zu der Einlaßnut 19 öffnet, so daß während einer manuellen Betätigung des Bremsventils kein Druck über die Ablaßöffnung 40 verloren geht. Hieraus folgt, daß ein Lastfühlabsperrventil sowie ein Lastfühlanschluß und die damit in Zusammenhang stehenden maschinell hergestellten Durchgänge bei der Ausbildung gemäß vorliegender Erfindung entfallen können. Desweiteren bildet die Ablaßöffnung 42 ein Ventil, bei dem ähnliche Bewegungen des Hochdruckkolbens 30 in seine beiden Richtungen ähnliche Druckanstiege und Druckabfälle erzeugt, d. h. es ergibt sich ein Ventil mit einer geringen Hysteresis.

Auch wenn die Erfindung lediglich anhand eines Ausführungsbeispiels beschrieben wurde, erschließen sich für den Fachmann im Lichte der vorstehenden Beschreibung sowie der Zeichnung viele verschiedenartige Alternativen, Modifikationen und Varianten, die unter die vorliegende Erfindung fallen. Beispielsweise funktioniert das Konzept der vorliegenden Erfindung auch dann, wenn der Einlaßdruck von einem Hydraulikpumpensystem, bei dem der Druck und Durchfluß kompensiert werden, oder einem "Niederdruck"-Konstantverdrängerpumpsystem gespeist wird.

## Patentansprüche

1. Zweistufiges Bremsventil zur Versorgung wenigstens eines Bremsmechanismus mit Flüssigkeitsdruck mit einem Einlaß (16, 19), der unter Druck stehende Bremsflüssigkeit von einer Pumpe (18) erhält, einer Stufenbohrung (24) und einem darin verschiebbaren Stufenkolben (26), der einen Vorfüllkolben (28) mit größerem Durchmesser und einen hohlen Hochdruckkolben (30) mit kleinerem Durchmesser aufweist, wobei der Stufenkolben (26) aus einer Ruhestellung wegbewegbar ist, um Bremsflüssigkeit zu dem Bremsmechanismus zu fördern, und wobei die Stufenbohrung (24) und der Stufenkolben (26) eine Vorfüllkammer (32) mit großem Querschnitt und eine Hochdruckkammer (34) einschließen, und der Hochdruckkolben (30) eine mit dem Bremsmechanismus in Verbindung stehende Steuernut (36) aufweist, die dann mit dem Einlaß (16, 19) in Verbindung steht, wenn der Hochdruckkolben (30) um eine bestimmte Wegstrecke (D) aus seiner Ruhelage bewegt wurde, um Bremsflüssigkeit aus der Hochdruckkammer (34) zu dem Bremsmechanismus zu fördern, **dadurch gekennzeichnet, daß** eine Ablaßöffnung (40) in dem Hochdruckkolben (30) ausgebildet ist, die während einer anfänglichen Bewegung des Stufenkolbens (26) aus seiner Ruhestellung die Hochdruckkammer (34) mit dem Vorratsbehälter (22) verbindet und die bei einer Bewegung des Hochdruckkolbens (30) um einen vorgebbaren Betrag (d - D) über besagte Wegstrecke (D) hinaus geschlossen wird.

2. Bremsventil nach Anspruch 1, **dadurch gekennzeichnet, daß** die Ablaßöffnung (40) eine in eine äußere Oberfläche des Hochdruckkolbens (30) eingelassene ringförmige Ablaßnut (42) und einen Durchgang enthält, der sich im wesentlichen radial von der Ablaßnut (42) zu dem Inneren des Hochdruckkolbens (30), das mit der Hochdruckkammer (34) verbunden ist, erstreckt.

3. Bremsventil nach Anspruch 1 oder 2, **dadurch gekennzeichnet, daß** die Ablaßöffnung (40) zwischen dem Vorfüllkolben (28) und der Steuernut (36) angeordnet ist.

## Claims

1. A two stage brake valve for supplying at least one brake mechanism with fluid pressure, with an inlet (16, 19) which receives brake fluid under pressure from a pump (18), a stepped bore (24) and stepped piston (26) slidable therein, having a pre-filling piston (28) with a greater diameter and a hollow high pressure piston (30) with a smaller diameter, wherein the stepped piston (26) can be moved out of a position of rest in order to feed brake fluid to the brake mechanism and wherein the stepped bore (24) and the stepped piston (26) enclose a pre-filling chamber (32) with a large cross-section and a high pressure chamber (34), and the high pressure piston (30) has a control groove (36) in communication with the brake mechanism and which is in communication with the inlet (16, 19) when the high pressure piston (30) has been moved through a certain stroke (D) out of its position of rest, in order to feed brake fluid from the high pressure chamber (34) to the brake mechanism, **characterized in that** a bleed opening (40) is formed in the high pressure piston (30) and connects the high pressure chamber (34) to the reservoir (22) during an initial movement of the stepped piston (26) out of its position of rest and is closed after movement of the high pressure piston (30) by a predetermined amount (d-D) beyond the said stroke (D).

2. A brake valve according to claim 1, **characterized in that** the bleed opening (40) includes an annular bleed groove (42) formed in an outer surface of the high pressure piston (30) and a passage which extends substantially radially from the bleed groove (42) to the interior of the high pressure piston (30), which is connected to the high pressure chamber (34).

3. A brake valve according to claim 1 or 2, **characterized in that** the bleed opening (40) is disposed between the pre-filling piston (28) and the control groove (36).

## Revendications

1. Soupape de freinage à deux étages pour alimenter au moins un mécanisme de freinage avec une pression de liquide, comportant une entrée (16, 19) qui reçoit un liquide de frein sous pression à partir d'une pompe (18), un perçage étagé (24) et un piston étagé (26) déplaçable dans le perçage et qui comporte un piston de préremplissage (28) possédant un diamètre plus important et un piston creux à haute pression (30) possédant un diamètre plus petit, et dans lequel le piston étagé (28) peut être écarté d'une position de repos pour entraîner du liquide de frein en direction du mécanisme de freinage, et dans lequel le perçage étagé (24) et le piston étagé (26) enserrent une chambre de préremplissage (32) possédant une section transversale étendue et une chambre à haute pression (34), et le piston haute pression (30) comporte une gorge de commande (36) qui est reliée au mécanisme de frein, et qui est reliée à l'entrée (16, 19) lorsque le piston à haute pression (30) s'est écarté d'une distance de déplacement déterminée (D) de sa position de repos, pour entraîner du liquide de frein hors de la chambre à haute pression (38) en direction du mécanisme de frein, **caractérisée en ce que** dans le piston à haute pression (30) est formée une ouverture de sortie (40) qui relie la chambre à haute pression (34) au réservoir (22), pendant le début du déplacement du piston étagé (26) à partir de sa position de repos, et qui est fermée, lors d'un déplacement du piston à haute pression (30) sur une distance pouvant être prédéterminée (d-D) au-delà de ladite distance de déplacement (D).

2. Soupape de freinage selon la revendication 1, **caractérisée en ce que** l'ouverture d'évacuation (40) contient une gorge annulaire d'évacuation (42), aménagée dans une surface extérieure du piston à haute pression (30), et un passage, qui s'étend sensiblement radialement depuis la gorge d'évacuation (42) jusqu'à l'espace intérieur du piston à haute pression (30), qui est relié à la chambre à haute pression (34).

3. Soupape de freinage selon la revendication 1 ou 2, **caractérisée en ce que** l'ouverture d'évacuation (42) est disposée entre le piston de préremplissage (28) et la gorge de commande (36).
